# EUROPEAN PATENT SPECIFICATION

(11) **EP 2 311 402 B1**
(45) Date of publication and mention of the grant of the patent: **30.04.2014**
(21) Application number: 10186648.1
(22) Date of filing: 06.10.2010
(51) Int. Cl.: A61C 7/10

(54) **A pressing force stabilizing quickly palate expanding device**
Druckkraftstabilisierungsvorrichtung mit schneller Gaumenerweiterung
Dispositif d'expansion de palais stabilisant rapidement la force de pression

(30) Priority: 13.10.2009 IT MI20091746
(43) Date of publication of application: 20.04.2011
(73) Proprietor: Veltri, Nicola, 20122 Milano (IT); Veltri, Alessandro, 20122 Milano (IT)
(72) Inventor: Veltri, Nicola, 20122 Milano (IT); Veltri, Alessandro, 20122 Milano (IT)
(74) Representative: Cicogna, Franco

(56) References cited:
- EP-A1- 0 304 756
- US-A- 4 323 345
- US-A1- 2004 214 126
- US-A1- 2005 037 313

## Description

### BACKGROUND OF THE INVENTION

The present invention relates to a cross or sagittal pressing force or stress stabilizing quickly palate expanding device, designed for properly stabilizing applied forces or stresses.

As is known, for properly correcting defects or "disgnatia" due to a reduction of the cross diameter of the top maxilla or jawbone, it has been found as efficient to carry out a disjunction operation of the palatine structure by an orthopedic device, which is conventionally called "quick palate expander".

Such a device is known for example from US 2005/037313 or US 2004/214126.

Typical prior approaches or solutions provide to connect to an expanding support central body four bars to be coupled to four permanent or deciduous molar teeth, just to provide an expanding thereof.

Other prior solutions provide to perform a connection to two molar teeth only. However, both the above approaches have been found as inefficient, in particular with respect to the possibility of a generation of undesired twisting stresses on the orthodontic apparatus, thereby modifying a proper pushing stress to be provided for expanding palate.

### SUMMARY OF THE INVENTION

The invention is as claimed in claim 1.

Accordingly, the aim of the present invention is to overcome the above mentioned drawbacks, by providing a pressing force or stress stabilizing quickly palate expanding device allowing pressing stresses to be always held in a properly oriented condition, without generating torsional or twisting stresses susceptible to deform or disalign the orthodontic device or apparatus.

Within the scope of the above mentioned aim, a main object of the invention is to provide such a pressing force stabilizing quickly palate expanding device adapted to also provide an optimum oral hygienic condition and which, moreover, is very comfortable to the user.

Another object of the present invention is to provide such a pressing force stabilizing quickly palate expanding device which, owing to its specifically designed constructional characteristics, is very reliable and safe in operation.

Yet another object of the present invention is to provide such a pressing force stabilizing quickly palate expanding device which may be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a quick expander for quickly transversely or sagitally expanding a human palate, while stabilizing applied pressing forces, characterized in that said expander comprises a central body including a pair of mutually movable blocks therefrom respectively extend a pair of right palate bars and a pair of left palate bars, each said bar pair having respective bar end portions which are respectively coupled to a right dental element and a left dental element, said expander further comprises a single driving bar operating between said blocks so as to reduce an overall size of said expander.

### BRIEF DESCRIPTION OF THE DRAWINGS

Further characteristics and advantages of the present invention will become more apparent hereinafter from the following detailed disclosure of a preferred, though not exclusive, embodiment of a pressing force stabilizing quickly palate expanding device, which is illustrated, by way of an indicative, but not limitative, example in the accompanying drawings, where:

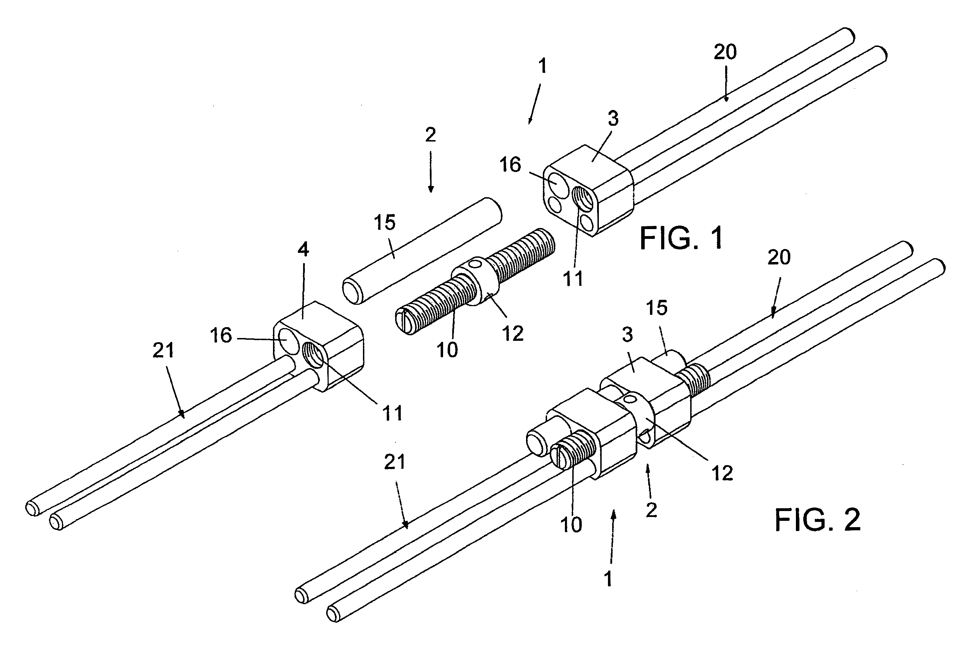

Figure 1 is an exploded perspective view of the palate expander according to the present invention;
Figure 2 shows the inventive palate expander in an assembled condition thereof;

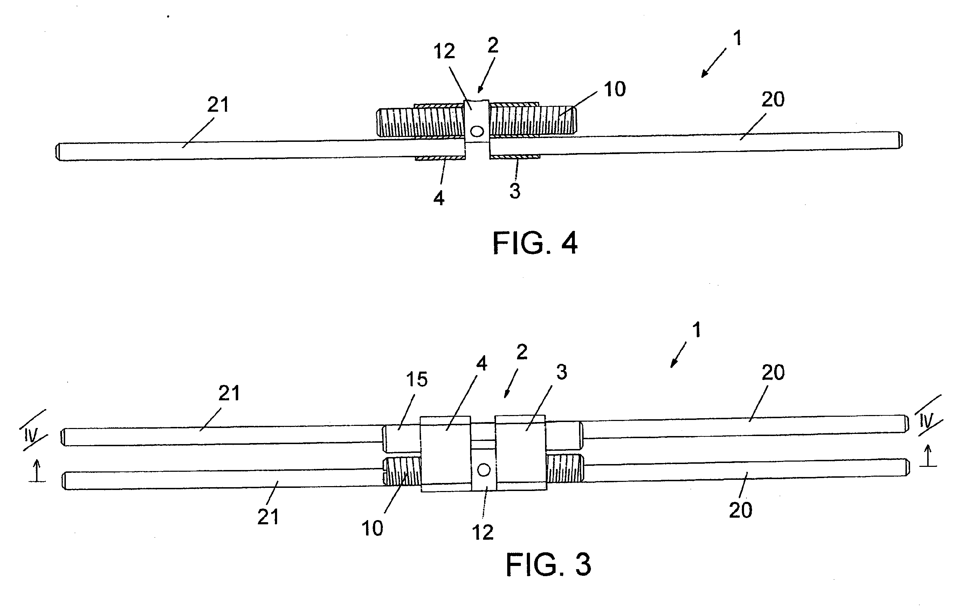

Figure 3 shows a top plan view of the palate expander according to the present invention;
Figure 4 is a cross-sectional view substantially taken along the line IV-IV of figure 3;

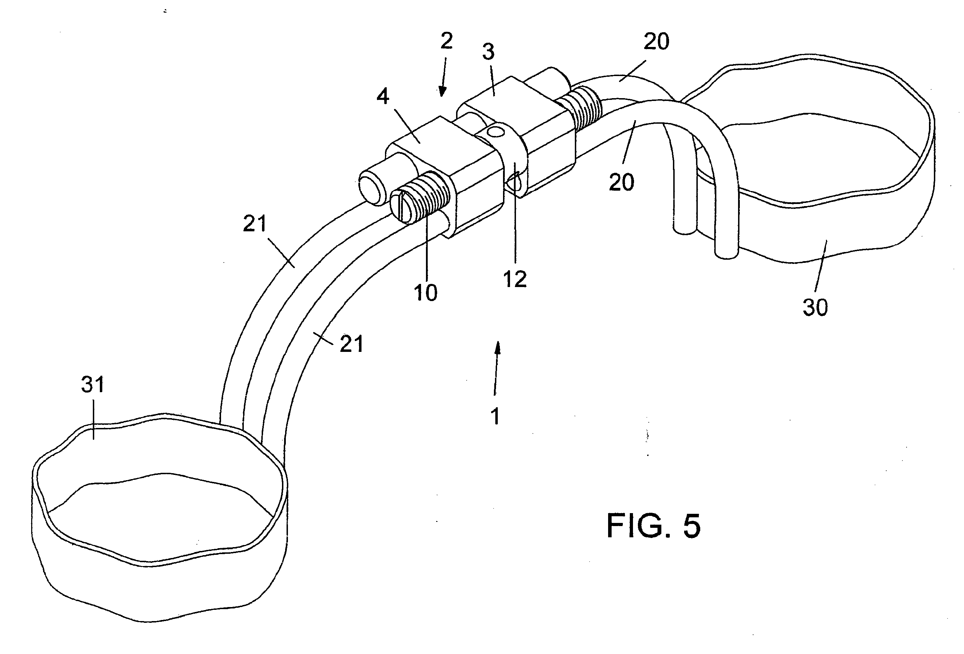

Figure 5 shows a further perspective view of the palate expander with elements thereof coupled to the molar teeth;
Figure 6 is yet another exploded perspective view of a different embodiment of the inventive palate expander;
Figure 7 shows the palate expander of figure 6, in an assembled condition thereof; and
Figures 8, 9 and 10 show the inventive palate expander including a plurality of guide pins having different cross-sections thereof.

### DESCRIPTION OF THE PREFERRED EMBODIMENTS

With reference to the number references of the above mentioned figures, the inventive expander, which has been generally indicated by the reference number 1, comprises a central body 2, including a pair of mutually movable blocks and, more specifically, a right block 3 and a left block 4.

Said blocks may be moved with respect to one another owing to the provision of a driving oppositely threaded screw 10 engaging in top throughgoing threaded holes or recesses 11 defined by said blocks 3 and 4.

Moreover, said screw 10 comprises an enlarged central portion 12 allowing it to be connected to a torque or rotatively driving tool.

The mutual displacement of said blocks 3 and 4 is guided by a guide pin 15, having a circular cross-section, engaging in top circular recesses or throughgoing holes 16 which are correspondingly defined through said blocks 3.

A main feature of the present invention is that from each of said blocks a pair of palate bar extend and, more precisely, a right palate bar pair 20 extending from the block 3, and a pair of left palate bars 21, extending from said block 4.

Said bars are parallel to and spaced from one another, are each engaged in a bottom hole of each said block and, at their free end portions are respectively adapted to be coupled to a right dental element and a left dental element.

To provide an easily performed connection, are moreover herein provided a right orthodontic band or strip 30 and a left orthodontic band or strip 31, which may be easily coupled to a set dental element to provide a target pushing stress or force thereon.

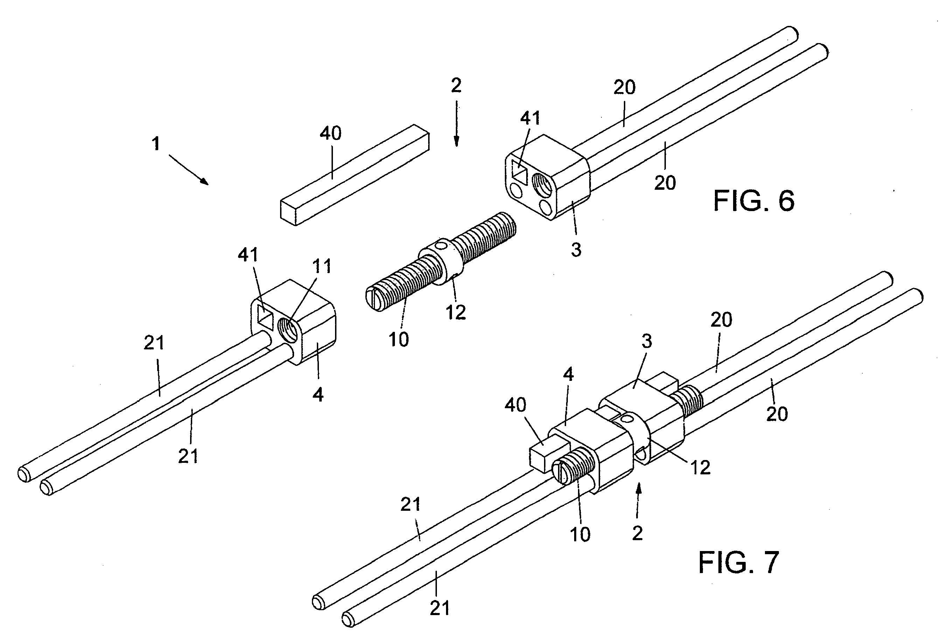

According to a modified embodiment, shown in figures 6 and 7, said guide pin or peg has a polygonal cross section and, in particular a rectangular guide pin 40 or a square guide pin engaging in mating recesses 41 correspondingly defined on said blocks are herein provided.

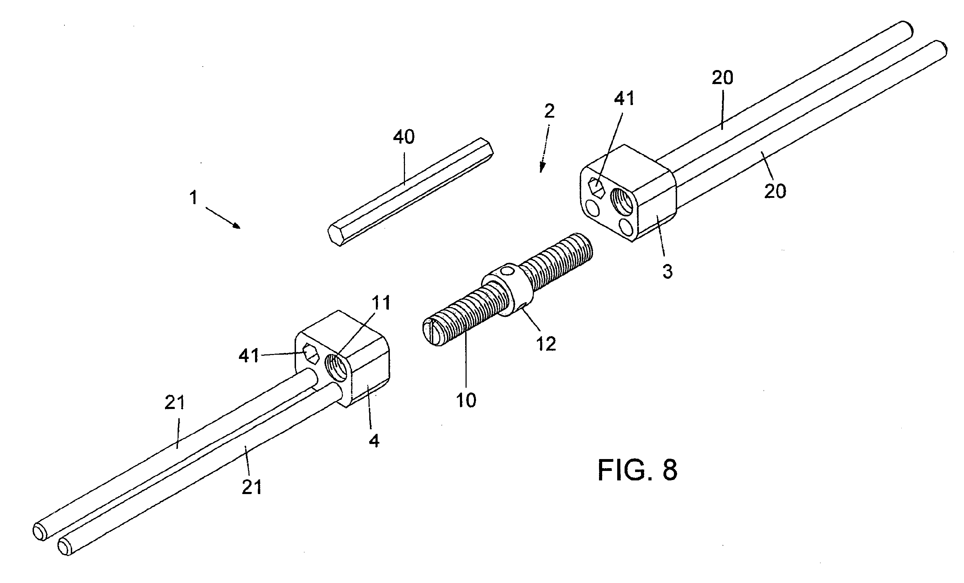

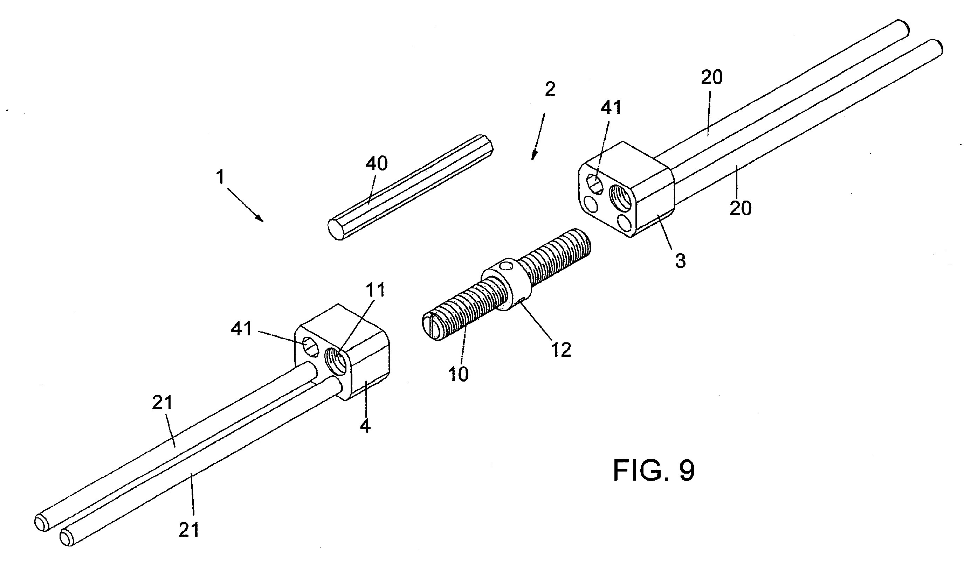

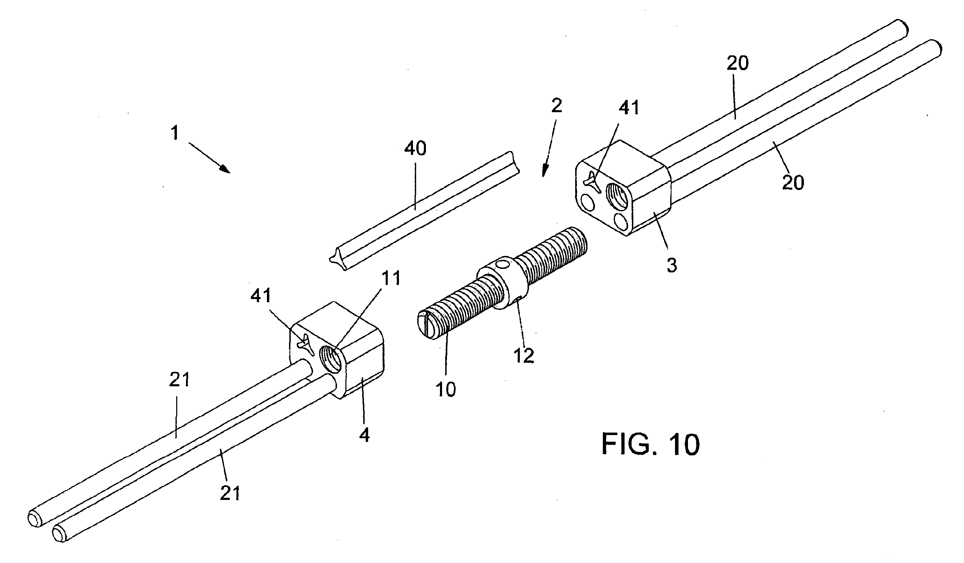

As shown in figures 8, 9 and 10, the guide pin 40 has respectively an hexagonal, octagonal, and tri-lobe configuration or pattern.

Thus, by the above made structure, it is possible to apply on the teeth desired pushing forces or stresses, without causing torsion phenomena or deforming the palatine bars, since the provision of a parallel and spaced bar pair allows to optimally absorb efforts or stresses even of a comparatively high value.

Moreover, by the above disclosed device it is possible, at each actuating of the expander central screw, to provide a proper pressure on the dental or tooth elements, corresponding to about 8-9 kilograms, which, being directly discharged or applied on two dental elements, will apply on each said dental element a pressing force of about 4 kilograms for respectively each said dental element.

Accordingly, the above disclosed device is a quick palate expander which is particularly useful from a mere constructional standpoint and which is adapted to apply corrective pushing stresses on the dental elements.

## Claims

1. A pressing force stabilizing quickly palate expanding device (1) allowing pressing forces to be always held in a properly oriented condition, without generating torsional or twisting stresses susceptible to deform or disalign said device, wherein said device (1) comprises a central body (2) including a pair of mutually movable blocks (3, 4) **characterized in that** each said block comprising two pairs of holes, of which a first pair are a first and second bottom holes from which extend respectively a pair of palate right bars (20) and a pair of palate left bars (21), said palate bars (20, 21) being rigid with each said blocks (3, 4) each said bar pair being adapted to be connected, at a free end portion thereof, respectively with a right tooth element and a left tooth element, and a second pair are top first (16) and second (11) throughgoing holes, the two throughgoing top holes (16) of said two blocks (3, 4) slidably receiving therein a single guide pin (15, 40), said second two throughgoing top holes (11) of said two blocks (3, 4) being threaded in opposite directions and housing rotatably therein a driving oppositely threaded screw (10) having a central enlarged driving portion (12).

2. A device, according to claim 1, **characterized in that** said guide pin (15) has a circular cross-sectional shape.

3. A device, according to claim 1, **characterized in that** said guide pin (40) has a square cross-sectional shape.

4. A device, according to claim 1, **characterized in that** said guide pin (40) has a rectangular cross-sectional shape.

5. A device, according to claim 1, **characterized in that** said guide pin (40) has a tri-lobe cross-sectional shape.

6. A device, according to claim 1, **characterized in that** said guide pin (40) has a hexagonal cross-sectional shape.

7. A device, according to claim 1, **characterized in that** said guide pin (40) has an octagonal cross-sectional shape.

## Patentansprüche

1. Druckkraftstabilisierende Gaumenschnellerweiterungsvorrichtung (1), welche ermöglicht, Druckkräfte stets in einem geeignet ausgerichteten Zustand zu halten, ohne Torsions- oder Verdrehspannungen zu erzeugen, die dazu neigen, die Vorrichtung zu verformen oder in eine Fehlausrichtung zu bringen, wobei die Vorrichtung (1) einen zentralen Körper (2) umfasst, der ein Paar von gegenseitig beweglichen Blöcken (3, 4) aufweist, **dadurch gekennzeichnet, dass** jeder Block zwei Lochpaare umfasst, von denen ein erstes Paar ein erstes und ein zweites unteres Loch sind, von denen sich ein Paar von rechten Gaumenstäben (20) bzw. ein Paar von linken Gaumenstäben (21) wegerstreckt, wobei die Gaumenstäbe (20, 21) mit den Blöcken (3, 4) starr sind, wobei jedes Stabpaar dazu ausgebildet ist, an einem freien Endabschnitt davon mit einem rechten Zahnelement bzw. einem linken Zahnelement verbunden zu werden, und von denen ein zweites Paar ein erstes (16) und ein zweites (11) oberes durchgehendes Loch ist, wobei die zwei durchgehenden oberen Löcher (16) der beiden Blöcke (3, 4) darin gleitfähig einen einzigen Führungsstift (15, 40) aufnehmen, wobei die zweiten zwei durchgehenden oberen Löcher (11) der beiden Blöcke (3, 4) in entgegensetzte Richtungen gewindet sind und darin drehbar eine mit entgegensetzten Gewinden versehene Antriebsspindel (10) aufnehmen, die einen mittigen vergrößerten Antriebsabschnitt (12) aufweist.

2. Vorrichtung nach Anspruch 1, **dadurch gekennzeichnet, dass** der Führungsstift (15) eine kreisförmige Querschnittsform aufweist.

3. Vorrichtung nach Anspruch 1, **dadurch gekennzeichnet, dass** der Führungsstift (40) eine quadratische Querschnittsform aufweist.

4. Vorrichtung nach Anspruch 1, **dadurch gekennzeichnet, dass** der Führungsstift (40) eine rechteckige Querschnittsform aufweist.

5. Vorrichtung nach Anspruch 1, **dadurch gekennzeichnet, dass** der Führungsstift (40) eine dreilappige Querschnittsform aufweist.

6. Vorrichtung nach Anspruch 1, **dadurch gekennzeichnet, dass** der Führungsstift (40) eine sechseckige Querschnittsform aufweist.

7. Vorrichtung nach Anspruch 1, **dadurch gekennzeichnet, dass** der Führungsstift (40) eine achteckige Querschnittsform aufweist.

## Revendications

1. Dispositif élargisseur de palais à stabilisation rapide et à force de pression (1) permettant à des forces de pression d'être toujours maintenues dans une orientation correcte, sans générer d'effort de torsion ou de gauchissement susceptibles de déformer ou de désaligner ledit dispositif, dans lequel ledit dispositif (1) comprend un corps central (2) comportant une paire de blocs (3, 4) mobiles l'un par rapport à l'autre, **caractérisé en ce que** chaque dit bloc comprend deux paires de trous, dont une première paire sont un premier et un second trous inférieurs à partir desquels s'étendent, respectivement, une paire de barres droites de palais (20) et une paire de barres gauches de palais (21), lesdites barres de palais (20, 21) étant fixées solidement sur chacun desdits blocs (3, 4), chaque dite paire de barres étant conçue pour être raccordée, à une portion de son extrémité libre, respectivement, avec un élément de dent droit et un élément de dent gauche, et une seconde paire sont un premier (16) et un second (11) trous traversants supérieurs, les deux trous traversants supérieurs (16) desdits deux blocs (3, 4) recevant, par coulissement à l'intérieur de ceux-ci, une goupille de guidage (15, 40) unique, lesdits deux seconds trous traversants supérieurs (11) desdits deux blocs (3, 4) étant filetés dans des directions opposées et logeant, par rotation à l'intérieur de ceux-ci, une vis d'entraînement à filetage opposé (10) possédant une portion centrale d'entraînement agrandie (12).

2. Dispositif selon la revendication 1, **caractérisé en ce que** ladite goupille de guidage (15) a une section de forme circulaire.

3. Dispositif selon la revendication 1, **caractérisé en ce que** ladite goupille de guidage (40) a une section de forme carrée.

4. Dispositif selon la revendication 1, **caractérisé en ce que** ladite goupille de guidage (40) a une section de forme rectangulaire.

5. Dispositif selon la revendication 1, **caractérisé en ce que** ladite goupille de guidage (40) a une section de forme à trois lobes.

6. Dispositif selon la revendication 1, **caractérisé en ce que** ladite goupille de guidage (40) a une section de forme hexagonale.

7. Dispositif selon la revendication 1, **caractérisé en ce que** ladite goupille de guidage (40) a une section de forme octogonale.
